Europäisches Patentamt

European Patent Office

Office européen des brevets

(11) Publication number: **0 232 952**
**A1**

## EUROPEAN PATENT APPLICATION

(21) Application number: **87200223.3**

(22) Date of filing: **11.02.87**

(51) Int. Cl.4: **B01D 29/30**

(30) Priority: **13.02.86 NL 8600357**

(43) Date of publication of application:
**19.08.87 Bulletin 87/34**

(84) Designated Contracting States:
**BE CH DE ES IT LI NL**

(71) Applicant: **Beheermaatschappij B. Bosman B.V.**
**Steegjesdijk 4**
**NL-3265 AE Piershil(NL)**

(72) Inventor: **Bosman, Dirk Jan**
**Steegjesdijk 12**
**NL-3267 BA Goudswaard(NL)**

(74) Representative: **Smulders, Theodorus A.H.J. et al**
**Vereenigde Octrooibureaux Nieuwe Parklaan 107**
**NL-2587 BP 's-Gravenhage(NL)**

(54) A filter apparatus having a tubular filter.

(57) A filter apparatus comprising a tubular filter, a supply means at one end, e.g. the top end, a discharge means at the other end, e.g. the bottom end, and a piston periodically movable axially through the filter. The filter is a grid-shaped strainer having bars extending parallel to its longitudinal axis, and the piston has corresponding projections extending between the bars.

FIG.1

## A filter apparatus having a tubular filter.

This invention relates to a filter apparatus comprising a tubular filter having a supply means at one end e.g. the top end, a discharge means at the other end, e.g. the bottom end, and a transport member periodically movable axially through said filter.

In a similar apparatus disclosed in British patent 3,171 AD 1910, the filter, which is spaced apart from the wall of the housing, consists of wire gauze with a covering thereon. In this apparatus, also designed for purifying waste water, dirt is removed from the filter by periodically moving a worm or a piston.

It is an object of the present invention to considerably improve the filtering capacity of such an apparatus, in particular with regard to keeping open said filter.

To this effect, a filter apparatus of the above described type is characterized in that the filter is a grid-shaped strainer basket having bars extending parallel to its longitudinal axis, said piston having corresponding projections extending between said bars. In this manner, the grid is cleaned periodically, so that after each piston stroke, the entire initial filter area is again available, in contrast to the known apparatus, wherein the filter comprises wire gauze and a fabric which will retain dirt.

A further improvement is obtained when the discharge end of the filter communicates via a connecting portion with an upwardly extending filter tube, thereby achieving further de-watering at the location of the filter tube. Around the filter tube, in operation usually projecting at least partly above the water surface, there may be provided a stench hood for preventing stench pollution to the surroundings.

Preventing stench pollution and the external cleaning of the filter are promoted by arranging an annular flushing water supply pipe between the filter tube and the stench hood near its top end, so that the outer surface of the filter tube can be cleansed out periodically.

In order to obtain a good transport of the dirt to be discharged, the connecting portion between the filter and the filter tube may be provided with backflow restrictions.

A further improvement of the transport capacity is obtained when the bottom end or, as the case may be, the said other end of the grid-shaped strainer is enclosed by a casing fitted with a discharge opening, thus forming a pressure chamber.

When the filter according to the present invention is used for cleaning waste water with a high fat content, for instance abattoir offal and the like, the piston moving through the grid-shaped strainer may be provided with a central supply means and a plurality of radial outlet channes communicating therewith, through which hot water can be supplied for cleaning the filter.

The filter apparatus according to the present invention on the one hand is very simple and on the other hand combines a great many functions, viz. filtering, de-watering, compressing and transporting functions.

Furthermore, the apparatus may be designed in various ways, i.e. the parts can be arranged in different positions relatively to each other, as will be apparent from the following description of some exemplary embodiments with reference to the accompanying drawings. In said drawings,

Fig. 1 is a diagrammatic side view of a filter apparatus according to the present invention;

Fig. 2 is an enlarged view on the line II-II of Fig. 1;

Fig. 3 is a view similar to Fig. 1 of a second embodiment;

Fig. 4 is a view similar to Fig. 1 of a third embodiment;

Fig. 5 is a view similar to Fig. 1 of a fourth embodiment; and

Fig. 6 is an enlarged detail view of the apparatus shown in Fig. 4, but with the piston being disposed in the filter.

In the drawings, the same parts are designated by the same reference numerals.

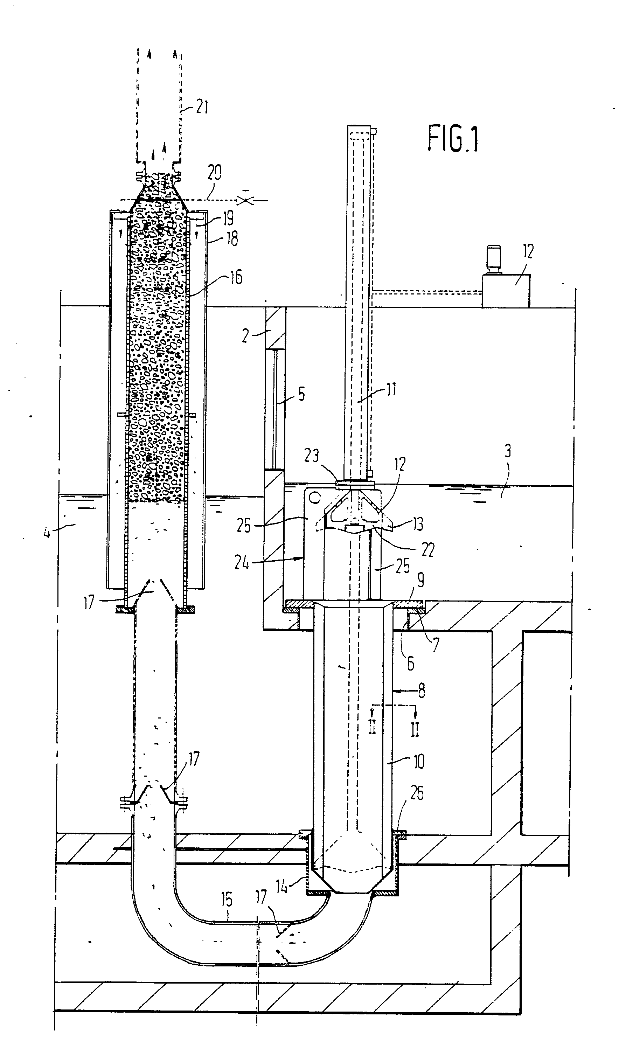

As shown in Fig. 1, a filter apparatus according to the present invention is arranged adjacent a water partition 2, on one side of which there is foul water 3 and on the other side cleaned water 4. Contained in partition 2 is a known per se dirt grid 5, possibly also serving as an emergency overflow.

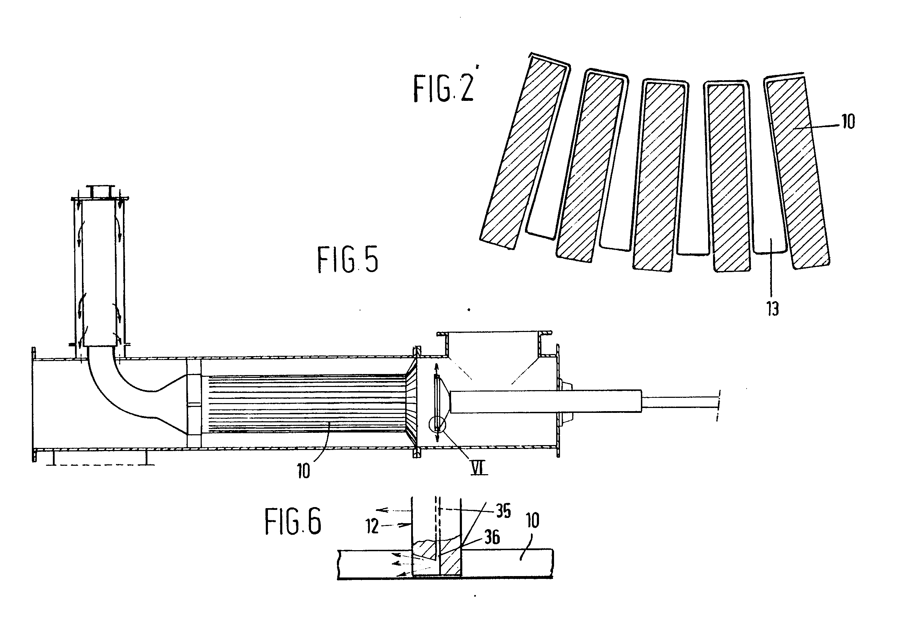

A horizontal portion of partition 2 contains an opening 6 wherein is mounted a filter 8, with interposition of a sealing ring 7, by means of a flange 9. Filter 8 consists of a grid-shaped strainer basket having bars 10 extending parallel to the longitudinal axis. In a vertical position above filter 8 is provided a piston-and-cylinder assembly 11 driven from a hydraulic unit 12. Mounted on the projecting end of the piston of piston-and-cylinder assembly 11 is a piston 12 having projecting prongs 13, corresponding in form and number with the number of bars 10 of grid 8 (Fig. 2). As a result, upon a reciprocating movement of the piston, on the one hand the grid will be cleaned and on the other hand the dirt present within the grid will be compressed and moved forwardly. This advanced position of the piston and piston rod is shown in Fig. I by dotted lines. Near the bottom end filter 8 is enclosed on the outside by a casing I4 forming a pressure chamber I4 whose bottom end communicates with a connecting portion I5. Pressure chamber I4 is constructed so as to take up the pressures occurring during the compression and transport of the dirt. To connecting portion I5 connects an upwardly extending filter tube I6 having such a length, or being disposed at such a height, that in operation, it lies above the level of the liquid 4. Connecting portion I5 contains one or more known per se backflow restrictions I7. Such a restriction I7 is also provided at the location where connecting portion I4 opens into filter tube I6.

Around filter tube I6 is provided a stench hood I8 for preventing stench pollution.

To enable the cleaning of the exterior of filter tube I6, there is arranged within the space between stench hood I8 and filter tube I6 adjacent the top, an annular flushing water supply pipe I9, fed through a water pipe 20. To the top of the filter tube connects a discharge pipe 2I, shown in dashed lines, through which the dirt can be discharged to e.g. a container.

For obtaining a good operation of filter 8 with bars I0 and piston I2, I3, the head end, i.e. the free end, of the piston is provided with a conical, corrugated surface 22, designed in such a manner that the dirt present between bars I0 -i.e. in front of prongs I3 -is moved inwards into the space formed by the grid-shaped strainer. Furthermore, the head end 22 of the piston is slightly conical towards the centre, resulting in a proper release from the dirt as it is retracted from its lowermost position.

As appears from the drawings, the piston-and-cylinder assembly II is mounted through flanges 23 on a frame 24 having three supports 25. Frame 24 with supports 25 serves on the one hand for supporting said assembly and on the other hand for guiding piston I2 with prongs I3.

Bars I0 of filter 8 are kept together at the bottom end by a flange-shaped ring 26, likewise serving for attaching the housing of pressure chamber I4.

After the foregoing, the operation of the apparatus according to the present invention will be clear. A further description thereof will therefore be dispensed with.

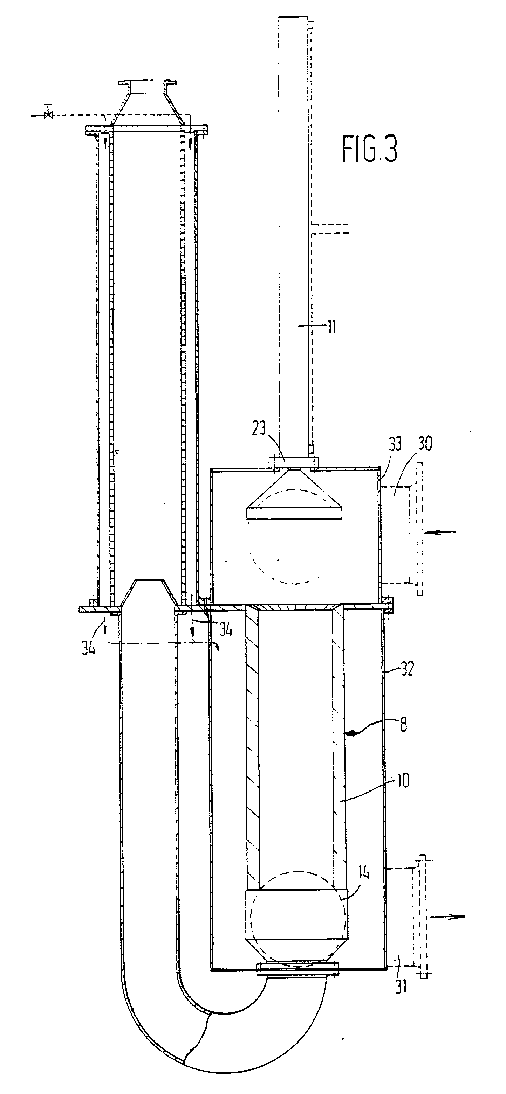

The embodiment shown in Fig. 3 differs from the embodiment shown in Figs. I and 2 only to the extent that the apparatus is not arranged in a partition between clean and foul water but that is directly connected to a foul-water inlet pipe 30 and a clean-water outlet pipe 3I (both shown in dotted lines). Moreover, around filter 8 and the superimposed frame is disposed an encasing 32, 33, thus producing a closed unit. Said encasing also connects to the space between filter tube I6 and stench hood I8, as shown in partly dotted lines 34 with arrows.

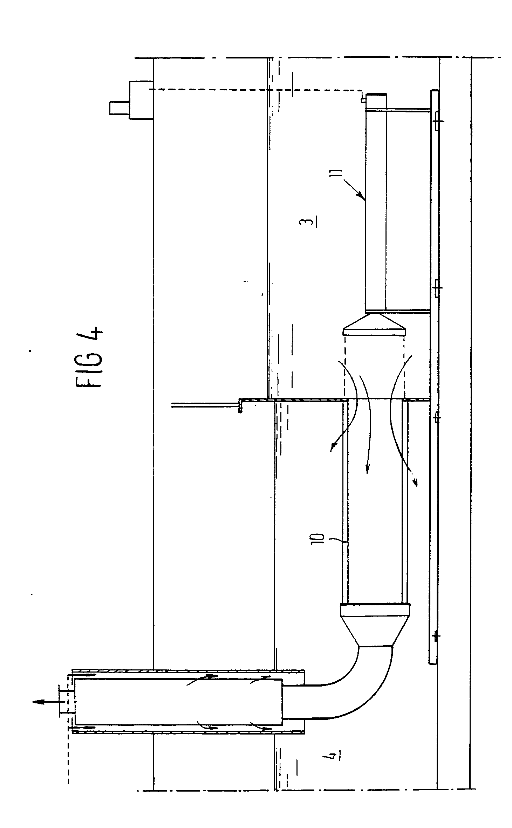

The embodiment shown in Fig. 4 differs from the embodiment shown in Fig. I only to the extent that filter 8, consisting of a grid-shaped strainer basket, is not arranged vertically but horizontally. This implies that the piston-and-cylinder assembly II is also below the liquid level of the foul water 3.

Fig. 5 shows an apparatus essentially corresponding with Fig. 4. The difference is that through the piston rods extends a channel, not further shown, opening into (see Fig. 6) a plurality of cross channels 35, opening, in their turn, into channels 36, terminating in the space between bars I0, and serving for the supply of hot water for removing residues of fat from the bars. This is especially of importance during the cleaning of waste water from e.g. an abattoir, usually containing much fat. Naturally, this fat is highly conducive to dirt accretion, which should be avoided.

It will be clear after the above that a great many variants are possible without departing from the scope of the present invention.

## Claims

1. A filter apparatus comprising a tubular filter having a supply means at one end, e.g. the top end, a discharge means at the other end, e.g. the bottom end, and a transport member periodically movable axially through said filter, characterized in that the filter is a grid-shaped strainer having bars extending parallel to the longitudinal axis, said piston having corresponding projections extending between said bars.

2. A filter apparatus according to claim I, characterized in that the discharge end thereof connects through a connecting portion to an upwardly extending filter tube.

3. A filter apparatus according to claim I, characterized in that a stench hood is disposed around the filter tube.

4. A filter apparatus according to claim I or 2, characterized in that the connecting portion between the filter and the filter tube is provided with backflow restrictions.

5. A filter apparatus according to any of the preceding claims, characterized in that the lower end, or as the case may be, the said other end, of the grid-shaped strainer is enclosed by a casing having a discharge opening, thereby forming a pressure chamber.

6. A filter apparatus according to claim 2 or 3, characterized in that adjacent the top end between the filter tube and the stench hood there is arranged an annular flushing-water supply pipe.

7. A filter apparatus according to any of the preceding claims, characterized in that the piston includes a central supply means and a plurality of radial outlet channels connected thereto for supplying hot water.

FIG.1

FIG.2

FIG.5

FIG.6

10

13

10

VI

35
36
12
10

0 232 952

FIG.3

23    33  30

11

34    34

32

8

10

34

14

31

FIG 4

## European Patent Office

**EUROPEAN SEARCH REPORT**

Application number

EP 87 20 0223

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 803 477 (M.J. KULLANDER) <br> * Page 1, lines 69-100; page 2 * | 1 | B 01 D 29/30 |
| A | | 3 | |
| | --- | | |
| A | FR-A-2 238 887 (MUANYAGIPARI KUTATO INTEZET) <br> * Page 5, lines 4-37; page 6 * | 1,4 | |
| | --- | | |
| A | US-A-1 906 391 (C.W. McKINLEY) <br> * Page 2, lines 102,117 * | 7 | |
| | --- | | |
| A | DE-B-1 223 343 (IMPROVED MACHINERY INC.) | | |
| | --- | | **TECHNICAL FIELDS SEARCHED (Int. Cl.4)** |
| A | DE-A-1 584 982 (PASSAVANT) | | B 01 D |
| | ----- | | |

The present search report has been drawn up for all claims

| Place of search | Date of completion of the search | Examiner |
|---|---|---|
| THE HAGUE | 12-05-1987 | DE PAEPE P.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82